# EUROPÄISCHE PATENTANMELDUNG

(11) **EP 1 518 830 A1**
(43) Veröffentlichungstag der Anmeldung: **30.03.2005**
(21) Anmeldenummer: 03090295.1
(22) Anmeldetag: 12.09.2003
(51) Int. Cl.: C02F 3/00, C02F 3/30

(54) **Verfahren zur lastabhängigen, selbstparametrierenden Regelung der Belüftung von Kläranlagen**

(71) Anmelder: Envicon Klärtechnik Verwaltungsgesellschaft mbH, 46537 Dinslaken (DE)
(72) Erfinder: Burmeister, Jörn, Dipl-Ing., 13353 Berlin (DE); Langanki, Götz, Dipl.-Ing., 10115 Berlin (DE); Schäfer, Uwe, Dipl.-Ing., 09394 Hohndorf (DE); Uhrlass, Andé, Dipl.-Ing., 04617 Treben (DE)
(74) Vertreter: Gulde, Klaus W.

(57) **Zusammenfassung**

Die Erfindung betrifft ein Verfahren zur lastabhängigen, selbstparamentrierenden Regelung der Belüftung von Kläranlagen.

Es ist die Aufgabe der Erfindung, die stickstoffabhängige Regelung des Sauerstoffeintrages in das Nitrifikationsbecken in der Weise zu verändern, dass bei hohem Ammoniumstickstoffwert (NH₄-N) und gleichzeitig niedrigem Nitratstickstoffwert (NO₃-N) im Ablauf des Nitrifikationsbeckens der Sauerstoffgehalt erhöht und bei entgegengesetzten Verhältnissen abgesenkt wird.

So ist das erfindungsgemäße Verfahren zur lastabhängigen, selbstparamentrierenden Regelung der Belüftung von Kläranlagen, bei denen das Nitrifikationsbecken oder einzelne Zonen desselben kontinuierlich belüftet werden, vorzugsweise Kläranlagen, die nach den Verfahren der vorgeschhalteten oder simultaten Denitrifikation arbeiten, dadurch gekennzeichnet, dass aus den Parametern Redoxpotential und/oder pH-Wert (18) ein je nach Belastung der Kläranlage variabler Sollwert für eine an sich bekannte Sauerstoffregelung berechnet wird, wobei der variable Sauerstoffsollwert (26) aus der Differenz des gemessenen aktuellen Redoxpotentialistwertes (24) und/oder aktuellen pH-Wertes und des für die jeweilige Kläranlage spezifischen Normals (21) des Redox- und/oder pH-Wertes berechnet wird.

## Beschreibung

Die Erfindung betrifft ein Verfahren zur lastabhängigen, selbstparamentrierenden Regelung der Belüftung von Kläranlagen gemäß dem Oberbegriff des Patentanspruches 1.

Eine optimale Prozessführung für Kläranlagen mit vorgeschalteter oder simultaner Denitrifikation setzt eine ständige bedarfsgerechte Konzentration von Gelöstsauerstoff im Nitrifikationsbecken bzw. in den belüfteten Zonen voraus.

Problematisch ist bei der vorgeschalteten Denitrifikation, dass das nitrat- und sauerstoffhaltige Abwasser-/Schlammgemisch aus dem Nitrifikationsbecken und der nitrathaltige Rücklaufschlamm in einer internen Rezirkulation dem Denitrifikationsbecken bzw. der Denitrifikationszone zugeführt wird, wobei es sich hier mit dem Zulauf mischt.

Bei der simultanen Denitrifikation strömt der nitrat- und sauerstoffhaltige Belebtschlamm aus der Nitrifikationszone der Denitrifikationszone direkt zu.

In beiden Fällen wird die Denitrifikation durch die Verschleppung des Gelöstsauerstoffs aus der Nitrifikations- in die Denitrifikationszonen erheblich behindert. Dabei wird kohlenstoffzehrende Substanz verbraucht, was zu einer Minderung des vor allem für die Denitrifikation dringend benötigten Biologischen Sauerstoffbedarf (BSB) führt. Gleichzeitig bedeutet der verschleppte Gelöstsauerstoff eine Vergeudung der Belüftungsenergie.

Weit verbreitet sind heute vorwiegend konventionelle Regler mit fest eingestellten Sollwerten. Geregelt werden z.B. Ammonium-, Nitrat- und Phosphatkonzentrationen, oder der organischen Summenparameter wie Totaler Organischer Kohlenstoff (TOC), Chemischer Sauerstoffbedarf (CSB), Biologischer Sauerstoffbedarf (BSB), wobei als Stellgröße die Sauerstoffzufuhr benutzt wird.

Eingesetzt werden dabei kontinuierlich messende Analysatoren zur Istwertbestimmung. Ein wesentlicher Nachteil bei der Verwendung dieser Parameter besteht in den hohen Anschaffungs- und Betriebskosten der Analysatoren. Ein zweiter funktioneller Nachteil besteht darin, dass der erforderliche Zeitraum zwischen Probenahme aus dem Belebungsbecken und Bereitstellung des Messwertes für die Regelung so gross ist, dass das der ermittelte Istwert für die Regelung schon nicht mehr mit den tatsächlichen Zustandsbedingungen im Belebungbecken übereinstimmt. Ein prozessoptimales Reagieren der Regelung ist durch diese Totzeit nicht möglich.

Die weitere Variante der Belüftungsregelung arbeitet mit fest vorgegebenen Sollwerten für die Sauerstoffkonzentration in der Nitrifikationszone bzw. des Belebungsbeckens. Dabei beruht die Sollwertvorgabe (wie auch im ersten Falle) auf Erfahrung und ist damit in hohem Maße subjektiver Beurteilung unterworfen. Entsprechend unterschiedlich ist das Ergebnis der Regelung und der der Abstand zum Optimum der Regelung.

Auch unter Anwendung aufwendiger und komplizierter Regelungsmodelle ist man nicht in der Lage, auf die komplexen und komplizierten Prozesse der Abwasserreinigung optimal zu reagieren, solange feste Sollwerte vorgegeben werden müssen (Korrespondenz Abwasser Nr. 4/1994, Seite 556-563). Solche Strategien sind mit erheblichen Problemen behaftet, da die den Abwasserreinigungsprozeß bestimmenden Faktoren nicht nur ein unterschiedliches dynamisches Verhalten aufweisen, sondern es ergeben sich bei multivariater Regelung z.T. entgegengesetzte Regelungsziele (z.B. zu hohe NH₄-Ablaufkonzentrationen durch Hemmung der Nitrifikanten aufgrund eines zu geringen pH-Wertes). Seit einigen Jahren wird daher an der Anwendung wissensbasierter Regelungssysteme und adaptiver Regelungen auf Modellbasis für die Prozeßregelung von Abwasserbehandlungsanlagen gearbeitet (Schriftenreihe WAR 109/56. Darmstädter Seminar-Abwassertechnik-1997, Seite 81-107). Bisher sind diese Modelle nur in sehr eingeschränktem Maße in der Lage, die Komplexität des Prozesses abzubilden. Fuzzy-Logic-Regelungen zeigen eine Vereinfachung der Modellbildung, da nur auf der Ebene des Prozesswissens modelliert werden kann. Dazu bedient man sich unscharfer (fuzzy) "wenn- dann-Regeln", die aus Expertenerfahrungen gewonnen werden. Bei allen Vorteilen der Fuzzy- Technologien hat diese Strategie unter sehr komplexen Anwendnugsbedingungen den Nachteil, dass die Anzahl der Eingangsgrößen und der Regeln sehr hoch ist. So ist bekannt, dass allein zur Regelung der Belüftung einer intermittierenden Kläranlage insgesamt 48 "wenn/dann-Regeln" auf der Basis von 6 Eingangsgrößen erforderlich sind. Damit ist die Basisforderung für regelbasierte Systeme nach Vollständigkeit und Widerspruchsfreiheit der Regeln kaum zu erfüllen. Wesentlich ist weiterhin die Tatsache, dass die Effektivität der Fuzzy-Logic-Regelungen maßgeblich durch die Qualität des Expertenwissens, aus dem diese Regeln erstellt werden und aus den konkreten durch Experten vorgegebenen Einstellbedingungen (z.B. Wahl der Form und Zahl der Zugehörigkeitsfunktionen, der Fuzzy-Operatoren und der Ausgangsgewichtsberechnung), bestimmt wird. Einsatzerfahrungen zeigten, dass Regelungen auf Basis von Fuzzy-Logic unter bestimmten Umständen zu schlechteren Betriebsergebnissen führten, als die herkömmlich eingesetzten Regelungen mit fest vorgegebenem Sollwert.

Selbstlernende Regelungssyteme auf der Basis neuronaler Netze befinden sich derzeit erst in den Anfängen. Bisher wurden sie hauptsächlich zur Simulation, Klassifikation und Voraussage von Zulauf- parametern eingesetzt (DE 198 27 877 A1) und (DE 199 12 655 A1).

Modellbasierte Regelungen auf der Basis von Prozesssimulationen haben zum Ziel, auf der Basis von online-Messungen die aktuelle Reinigungskapazität zu ermitteln und aus den vorausgegangenen und gegenwärtigen Meßdaten die zu erwartenden Ablaufkonzentrationen zu ermitteln. Diese Regelungen erfordern eine ständige Anpassung der Modellparameter an die realen Bedingungen. Da im Regelfall nicht alle zur Berechnung der Modellparameter erforderlichen Messgrößen kontinuierlich bestimmt werden können, sind z.T. starke Vereinfachungen in der Modellbildung nötig (Schriftenreihe WAR 108/9. Gemeinsames Seminar -Abwassertechnik- Darmstadt 1998, Seite 109-136). Der zu regelnde Abwasserreinigungsprozeß kann daher nur eingeschränkt optimiert werden.

Aus der Analyse des Standes der Technik geht hervor, dass die Aufgaben einer prozessoptimalen Belüftungsregelung in der Praxis bisher nur unzureichend gelöst worden sind.

Es ist die Aufgabe der Erfindung, die stickstoffabhängige Regelung des Sauerstoffeintrages in das Nitrifikationsbecken in der Weise zu verändern, dass bei hohem Ammoniumstickstoffwert (NH₄-N) und gleichzeitig niedrigem Nitratstickstoffwert (NO₃-N) im Ablauf des Nitrifikationsbeckens der Sauerstoffgehalt erhöht und bei entgegengesetzten Verhältnissen abgesenkt wird.

Die Lösung der Aufgabe erfolgt mit dem kennzeichnenden Teil des Anspruches 1. Weiterbildungen sind in den Unteransprüchen angegeben.

Die Regelung der Belüftung bei Kläranlagen mit vorgeschalteter oder simultaner Denitrifikation sollte so vorgenommen werden, dass eine optimale Energienutzung unter sich ändernden Lastbedingungen möglich wird. Dabei handelt es sich um eine bedarfsgerechten Regelung des Sauerstoffeintrags in die Nitrifikationszone in der Weise, dass Sauerstoff je nach anfallender Fracht bereitgestelt wird. Eine solche bedarfsgerechte Regelung des Sauerstoffeintrages in Abhängigkeit von der Fracht führt zur Senkung der Betriebskosten durch Minimierung des erforderlichen Aufwandes an Belüftungsenergie.

So ist das erfindungsgemäße Verfahren zur lastabhängigen, selbstparamentrierenden Regelung der Belüftung von Kläranlagen, bei denen das Nitrifikationsbecken oder einzelne Zonen desselben kontinuierlich belüftet werden, vorzugsweise Kläranlagen, die nach den Verfahren der vorgeschalteten oder simultanen Denitrifikation arbeiten, dadurch gekennzeichnet, dass aus den Parametern Redoxpotential und /oder pH-Wert ein je nach Belastung der Kläranlage variabler Sollwert für eine an sich bekannte Sauerstoffregelung berechnet wird, wobei der variable Sauerstoffsollwert aus der Differenz des gemessenen aktuellen Redoxpotentialistwertes und/oder aktuellen pH-Wertes und des für die jeweilige Kläranlage spezifischen Normals des Redox- und/oder pH-Wertes berechnet wird.
Für die Ermittlung des für die jeweilige Kläranlage spezifischen Normals des Redox- und/oder pH-Wertes wird ein Mittelwert aus dem Langzeitverhalten der Meßwerte, Redoxpotential und/oder pH-Wert in einer Weiterbildung der Erfindung herangezogen.

Vorteilhafterweise erfolgt die Mittelwertbildung über einen Zeitraum gleich oder größer der mittleren Verweildauer des Klärgutes in der Kläranlage.
In einer weiteren, vorteilhaften Ausbildung der Erfindung erfolgt die Bestimmung der Mittelwerte zur Berechnung des Redox- und/oder pH-Wertes durch die Bildung einer Amplitudenhäufigkeit, wobei der Mittelwert ein wählbares Quantil der Amplitudenhäufigkeit ist.

In einer weiteren, zweckmäßigen Weiterbildung der Erfindung wird der Sollwert der Sauerstoffkonzentration aus der Summe des mathematischen Produktes einer einstellbaren Konstante und aus der Differenz des Redox- und/oder pH-Wertes und eines vorgegebenen Sauerstoffgrundwertes gebildet.

Durch messende Beobachtung von relevanten Prozeßgrößen in der Nitrifikationszone über einen langen Zeitraum wird das Normalverhalten der Kläranlage erfasst, aus der Differenz dieses Normals mit dem aktuellen Wert der aktuellen Belastungszustand der Kläranlage ermittelt und aus diesem Zustandswert ein optimaler Sauerstoffsollwert für die Sauerstoffregelung berechnet. Der Sauerstoffsollwert wird einem an sich bekannten Regler (z.B. PID-Regler) zugeführt. Erfindungsgemäß werden als relevante Prozeßgrößen das RedoxPotential und/oder der pH-Wert herangezogen. Mit dem Verfahren zur Regelung der Belüftung für intermittierende Klärwerke (DE 198 198 75) konnte gezeigt werden, dass Prozessgrössen Gelöstsauerstoff, Redox-Potenzial und pH-Wert im Belebungsbecken Relevanz für eine Zustandsbeschreibung im Belebungsbecken haben.

Das Verfahren soll im Folgenden an einem Beispiel und den zugehörigen Zeichnungen näher erläutert werden:

Es zeigen:
Fig. 1
   eine schematische Darstellung einer Kläranlage mit vorgeschalteter Denitrifikation,
Fig. 2
   eine schematische Darstellung des erfindungsgemäßen Regelungsverfahrens und

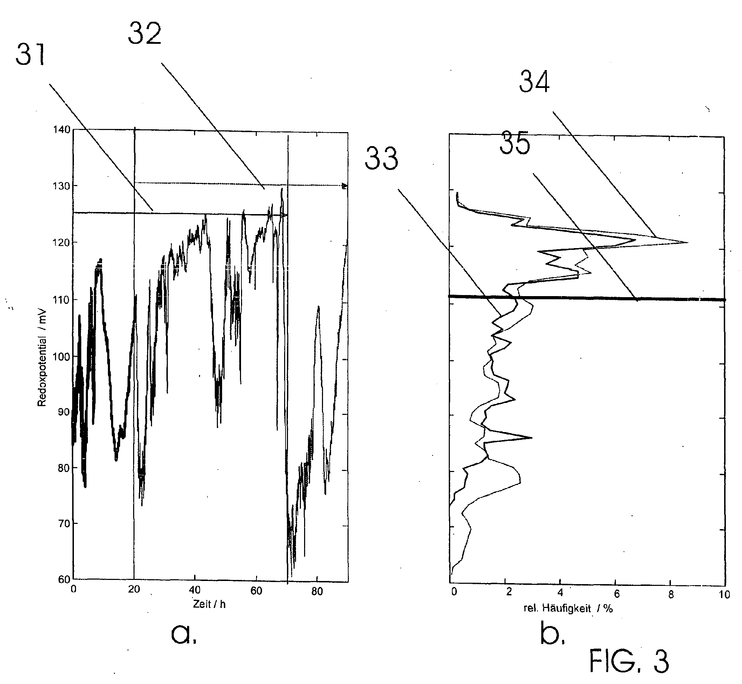

Fig. 3 a und b
   ein Beispiel der Berechnung des Kläranlagennormals durch Amplitudenhäufigkeitsverteilung des Redoxpotenzials.

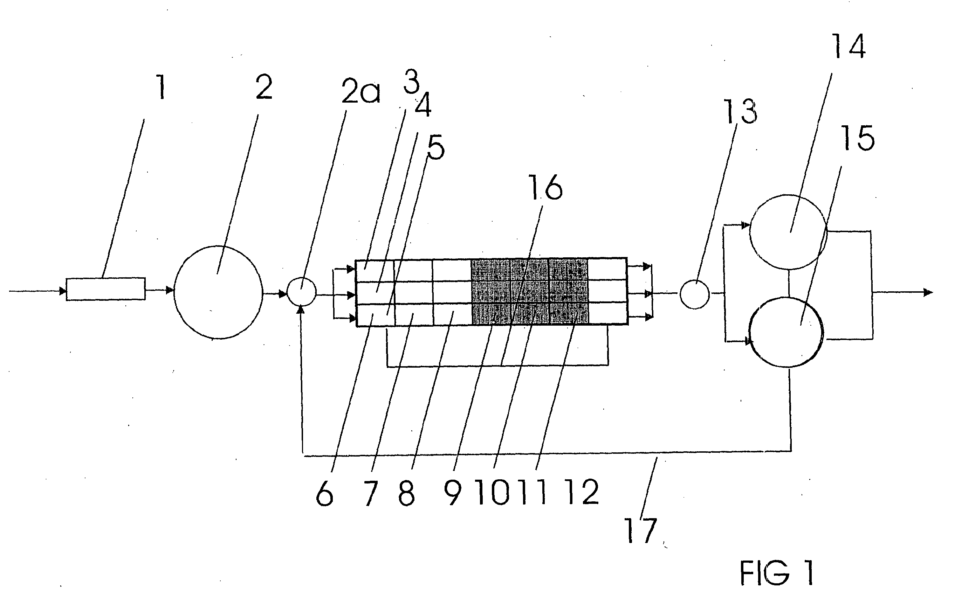

Ein beispielhafter Aufbau einer Kläranlage mit vorgeschalteter Denitrifikation ist in Fig. 1 dargestellt. Das Klärgut fließt zunächst durch einen Rechen in einen belüfteten Sandfang/ Fettfang 1, dann in ein Vorklärbecken 2. Das Klärgut wird über einen Verteiler 2a auf einzelne Straßen 3,4 und 5, die in Kaskaden 6, 7, 8, 9, 10, 11 und 12 unterteilt sind, verteilt. Nach den letzten Kaskaden 12 der Straßen 3, 4 und 5 wird das Klärgut in einem gemeinsamen Zusammenfluß 13 zusammengeführt, von dem es in Nachklärbecken 14 und 15 fließt. Eine interne Rezirkulation 16 fördert einen Teil des Klärgutes von den letzen Kaskaden 12 in die ersten Kaskaden 6. Eine Rücklaufschlammförderung 17 fördert von beiden Nachklärbecken 14 und 15 Schlamm zum Verteiler 2a zurück. Die Kaskaden 9, 10 und 11 der Straßen 3, 4 und 5 werden für einen optimalen Ablauf der Nitrifikation belüftet.

Das Redoxpotenzial, der pH-Wert und der Gelöstsauerstoff werden in den Kaskaden 12 gemessen, die sich den belüfteten Kaskaden 9, 10 und 11 anschließen.

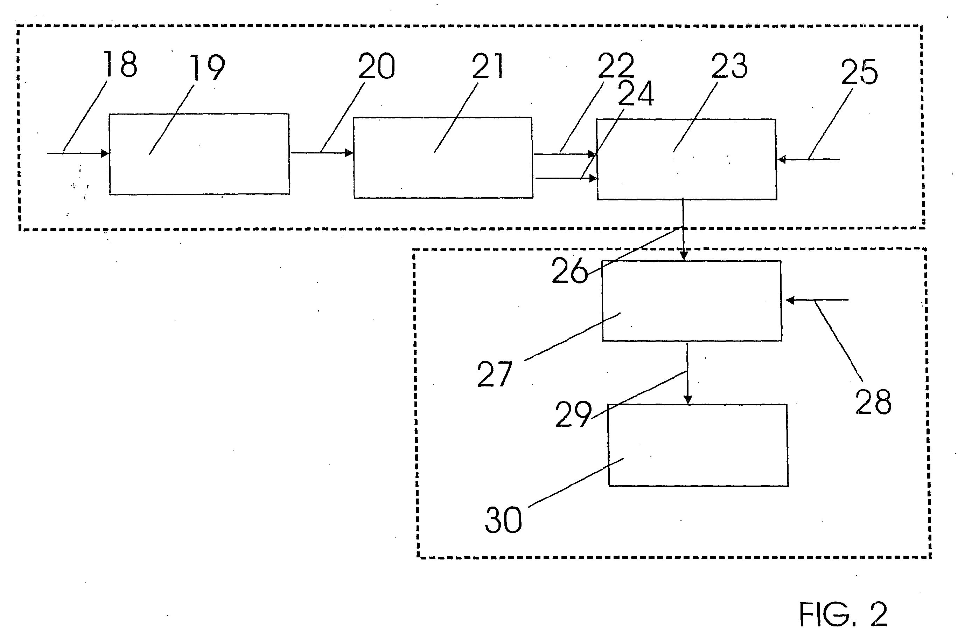

Das erfindungsgemäße Verfahren zur Regelung der Belüftung ist in Fig. 2 schematisch dargestellt.

Das Redoxpotenzial bzw. der pH-Wert werden von entsprechenden Sensoren als Analogwerte 18 einem Vorverarbeitungsmodul 19 zugeführt. Hier werden aus den Analogwerten im Zeittakt von 2 s Einzelmesswerte aufgenommem, aus denen alle 60 s ein Mittelwert berechnet wird. Die Mittelwerte werden im Vorverarbeitungsmodul 19 als Zeitreihen zwischengespeichert. Die Zeitreihen werden über eine Normalübertragung 20 anschließend für einen definierten Zeithorizont, der der mittleren Verweildauer des Klärgutes in der Kläranlage entspricht, an ein Modul für die Ermittlung des Kläranlagennormals 21 übertragen. Im Modul für die Ermittlung des Kläranlagennormals 21 wird die Berechnung des Kläranlagennormals ausgeführt. Dazu werden aus zeitlich begrenzten Zeitreihen 31 und 32 statistische Amplitudenhäufigkeitsverteilungen 33 und 34 berechnet (Fig. 3). Diese statistischen Verteilungen wiederspiegeln das Normalverhalten des Klärprozesses über ein längeres Zeitintervall, das erfahrungsgemäß keine Normalverteilung, sondern eine mehrgipflige Amplitudenhäufigkeitsverteilung 33 und 34, wie aus Fig 3 zu entnehmen ist, zeigt. Aus den Amplitudenhäufigkeitsverteilungen 33 und 34 wird ein Quantil (z.B. 70% der Histogrammfläche) berechnet, das als mittleres Kläranlagennormal 35 interpretiert wird. Dieser Wert wird als Redox- bzw. pH-Sollwert 22 bezeichnet. Der Redox- bzw. pH-Sollwert 22 wird gleitend in einem einstellbaren Zeitabstand ermittelt (z.B. alle 3 Stunden) und einem Reglermodul 23 zugeführt. Gleichzeitig wird ein aktueller Redox- bzw. pH-Istwert 24 an das Reglermodul 23 übergeben.

Es wird ein Referenzwert 25 für die Gelöstsauerstoffkonzentration festgelegt (z.B. 1 mg/l). Der Referenzwert 25 entspricht der erforderlichen Sauerstoffkonzentration, wenn der Redoxistwert 24 dem Redoxsollwert 22 entspricht.

Bei Abweichen des Redoxistwertes 24 zum Redoxsollwert 22 wird eine Sauerstoffkonzentrationsänderung berechnet (z.B. +3 mg/l je -100mV Redoxdifferenz zwischen Ist- und Sollwert.). Der ermittelte Sauerstoffwert wird geglättet und nach oben und unten begrenzt und an einen PID-Regler 27 als Sauerstoffsollwert 26 weitergegeben. Gleichzeitig wird ein Gelöstsauertsoffistwert 28 dem PID-Regler 27 zugeführt und durch den PID-Regler 27 aus der Differenz vom Gelöstsauerstoffistwert 28 und Sauerstoffsollwert 24 ein weiterer Luftschieberstellungssollwert 29 berechnet. Durch einen Zweipunktregler 30 wird die Luftschieberaktion ausgelöst.

Fig. 3 a) und b) zeigen Diagramme zur Darstellung der Berechnung des mittleren Kläranlagennormals 35. Fig. 3a zeigt den Verlauf des Redoxpotenzials über einen Zeitraum von 90 Stunden und exemplarisch zwei Zeitreihen 31 und 32. In Fig. 3b sind die zugehörigen relativen Amplitudenhäufigkeitsverteilungen 33 und 34 (Histogramme) der jeweiligen Zeitreihen 31 und 32 dargestellt. Zur Zeitreihe 31 gehört das die Amplitudenhäufigkeitsverteilung 33, zur Zeitreihe 32 die Amplitudenhäufigkeitsverteilung 34. Das berechnete mittlere Kläranlagennormal 35 ist ebenfalls eingezeichnet.

### Bezugszeichenliste

- 1: Sandfang/ Fettfang
- 2: Vorklärbecken
- 2a: Verteiler
- 3: Straße
- 4: Straße
- 5: Straße
- 6: Kaskade
- 7: Kaskade
- 8: Kaskade
- 9: Kaskade
- 10: Kaskade
- 11: Kaskade
- 12: Kaskade
- 13: Zusammenfluß
- 14: Nachklärbecken
- 15: Nachklärbecken
- 16: innere Rezirkulation
- 17: Rücklaufschlammförderung
- 18: Analogwert
- 19: Vorverarbeitungsmodul
- 20: Normalübertragung
- 21: Modul für die Ermittlung des Kläranlagennormals
- 22: Redox- bzw. pH-Sollwert
- 23: Reglermodul
- 24: Redox- bzw. pH-Istwert
- 25: Referenzwert
- 26: Sauerstoffsollwert
- 27: PID-Regler
- 28: Gelöstsauerstoffistwert
- 29: Luftschieberstellungswert
- 30: Zweipunktregler
- 31: Zeitreihe
- 32: Zeitreihe
- 33: Amplitudenhäufigkeitsverteilung
- 34: Amplitudenhäufigkeitsverteilung
- 35: mittleres Kläranlagennormal

## Patentansprüche

1. Verfahren zur lastabhängigen selbstparametrierenden Regelung der Belüftung von Kläranlagen, bei denen das Belebungsbecken oder einzelne Zonen desselben kontinuierlich belüftet werden, vorzugsweise Kläranlagen, die nach den Verfahren der vorgeschalteten oder simultanen Denitrifikation arbeiten,
**dadurch gekennzeichnet** dadurch, dass
aus den Parametern Redoxpotential und /oder pH-Wert ein je nach Belastung der Kläranlage variabler Sollwert für eine an sich bekannte Sauerstoffregelung berechnet wird, wobei der variable Sauerstoffsollwert aus der Differenz des gemessenen aktuellen Redoxpotentialistwertes und/oder aktuellen pH-Wertes und des für die jeweilige Kläranlage spezifischen Normals des Redox- und/oder pH-Wertes berechnet wird.

2. Verfahren nach Anspruch 1,
**dadurch gekennzeichnet, dass**
für die Ermittlung des für die jeweilige Kläranlage spezifischen Normals des Redox- und/oder pH- Wertes ein Mittelwert aus dem Langzeitverhalten der Messwerte Redoxpotential und/oder pH-Wert herangezogen wird.

3. Verfahren nach Anspruch 1 oder 2,
**dadurch gekennzeichnet, dass**
die Mittelwertbildung über einen Zeitraum gleich oder größer der mittleren Verweildauer des Klärgutes in der Kläranlage erfolgt.

4. Verfahren nach einem der Ansprüche 1 bis 3,
**dadurch gekennzeichnet, dass**
die Bestimmung der Mittelwerte zur Berechnung des Redoxund/oder pH-Wertes durch die Bildung einer Amplidudenhäufigkeit erfolgt, wobei der Mittelwert ein wählbares Quantil der Amplitudenhäufigkeit ist.

5. Verfahren nach einem der Ansprüche 1 bis 4,
**dadurch gekennzeichnet, dass**
der Sollwert der Sauerstoffkonzentration aus der Summe des mathematischen Produkts einer einstellbaren Konstante und aus der Differenz des Redox- und/oder pH-Wertes und eines vorgegebenen Sauerstoffgrundwertes gebildet wird.
